(19) Europäisches Patentamt

European Patent Office

Office européen des brevets

(11) **EP 0 965 440 B1**

(12) **FASCICULE DE BREVET EUROPEEN**

(45) Date de publication et mention
de la délivrance du brevet:
**29.08.2001 Bulletin 2001/35**

(51) Int Cl.⁷: **B29C 70/24**

(21) Numéro de dépôt: **99400787.0**

(22) Date de dépôt: **31.03.1999**

(54) **Armature fibreuse pour pièce de matière composite, ainsi que procédé et dispositif pour sa réalisation**

Faserförmige Bewehrung für ein Teil aus Verbundwerkstoff sowie Verfahren und Vorrichtung zu dessen Herstellung

Fibrous reinforcement for composite article as well as method and apparatus for its manufacture

(84) Etats contractants désignés:
**BE CH DE ES GB IE IT LI NL PT SE**

(30) Priorité: **10.06.1998 FR 9807278**

(43) Date de publication de la demande:
**22.12.1999 Bulletin 1999/51**

(73) Titulaire: **Aerospatiale Matra
75116 Paris (FR)**

(72) Inventeur: **Cahuzac, Georges
33110 Le Bouscat (FR)**

(74) Mandataire: **Bonnetat, Christian
CABINET BONNETAT
29, rue de St. Pétersbourg
75008 Paris (FR)**

(56) Documents cités:
**EP-A- 0 284 497        EP-A- 0 556 088
DE-A- 3 147 228        GB-A- 2 159 460**

**Description**

La présente invention concerne les armatures composées de fibres résistantes distribuées selon trois dimensions et destinées à la réalisation de pièces de matière composite qui sont formées desdites armatures noyées dans une matrice durcie. Elle concerne également un procédé et un dispositif pour la réalisation de telles armatures.

Par exemple par les brevets américains US-A-2 283 802, US-A-3 322 868, US-A-4 080 915, US-A-4 863 660, US-A-4 917 756, US-A-5 515 798, US-A-5 543 005 et US-A-5 642 679, on connaît déjà un procédé pour réaliser de telles armatures composées de fibres distribuées selon trois dimensions. Dans ces techniques connues, on forme un substrat de telles fibres, par exemple croisées suivant au moins deux directions, puis on lie entre elles les fibres dudit substrat par piquage, en introduisant un fil de solidarisation continu dans ledit substrat au moyen d'une aiguille animée d'un mouvement de va-et-vient, tandis que se produit un déplacement relatif de ladite aiguille par rapport audit substrat, de sorte que ledit fil de solidarisation continu forme des lignes de piquage, qui sont chacune constituées par une suite de points de piquage traversant orthogonalement ledit substrat.

Le brevet US-A-5 642 679 décrit les préambules des revendications indépendantes 1, 20 et 22.

L'usage montre que lesdits points de piquage ne confèrent pas à ces armatures composites connues une résistance élevée en cisaillement, parallèlement audit substrat. De plus, lorsque ledit substrat est formé, comme cela est usuel, par des nappes de fibres superposées, lesdits points de piquage ne peuvent empêcher le délaminage desdites nappes.

Pour expliquer une telle limitation des résistances au cisaillement et au délaminage, on peut avancer les hypothèses suivantes :

- les deux brins de fil constituant chaque point de piquage ne peuvent travailler ni en compression, ni en traction, lorsqu'un effort parallèle au substrat est appliqué à ladite armature ;
- la résistance des deux brins de fil de chaque point de piquage à un tel effort, dont la direction leur est transversale, ne peut qu'être faible ; et
- les deux brins de fil de chaque point de piquage écartent les fibres qui constituent lesdites nappes et à travers lesquelles ils passent, en engendrant la formation de fentes, dont la largeur est au moins égale au diamètre dudit fil de solidarisation. De telles fentes diminuent les surfaces de contact des nappes entre elles, ce qui entraîne une diminution de la résistance au cisaillement de l'armature.

La présente invention a pour objet de remédier à ces inconvénients et de permettre la réalisation d'armatures fibreuses du type rappelé ci-dessus présentant des résistances élevées au cisaillement et au délaminage.

A cette fin, selon l'invention, l'armature pour pièce de matière composite, comprenant un substrat fibreux renforcé par un fil de piquage formant des points de piquage traversant ledit substrat à partir d'une face extérieure de ce dernier, est remarquable en ce qu'au moins certains desdits points de piquage sont obliques et traversent ledit substrat en biais en faisant un angle d'inclinaison au plus égal à 30° avec ladite face extérieure dudit substrat. De préférence, ledit angle d'inclinaison est au plus égal à 10°. On remarquera que, si ladite armature subit un tassage après réalisation desdits points de piquage obliques, l'angle d'inclinaison de ceux-ci peut être encore plus faible après tassement.

Ainsi, dans l'armature fibreuse conforme à la présente invention, les deux brins de fil de chaque point de piquage sont très inclinés par rapport au sens de l'épaisseur de ladite armature, de sorte que non seulement ils assurent le liage des fibres de l'armature dans le sens de l'épaisseur, mais encore ils sont susceptibles de travailler en traction et/ou en compression dans le sens de la ligne de piquage. Ils peuvent donc assurer des résistances élevées au cisaillement et au délaminage à ladite armature.

On remarquera que la présente invention peut être mise en oeuvre :

- quelle que soit la nature (feutre, nappes superposées, etc ...) dudit substrat fibreux ;
- quelle que soit la forme (plaque, corps creux, etc...) dudit substrat fibreux ; et
- quel que soit le mode de piquage (avec ou sans noeud).

Dans le cas où ledit fil de piquage forme au moins un premier ensemble de premières lignes de piquage parallèles entre elles, qui définissent une première direction de piquage et sont constituées de premiers points de piquage traversant ledit substrat à partir de ladite face extérieure de ce dernier, il est avantageux que chacun desdits premiers points de piquage soit oblique et traverse ledit substrat en biais en faisant un premier angle d'inclinaison au plus égal à 30° avec ladite face extérieure dudit substrat.

On notera que, puisque ledit fil de piquage suit un trajet en zigzags inclinés à l'intérieur de ladite armature, celle-ci possède, parallèlement à ladite première direction de piquage, une capacité de déformation supérieure à une armature dans laquelle lesdites premières lignes de piquage seraient remplacées par des fils rectilignes de même direction. Aussi, l'armature selon l'invention peut, le cas échéant, être appliquée sur une forme dont la surface n'est pas développable.

Dans le cas usuel où ledit substrat fibreux comprend au moins une première nappe constituée de tronçons de fils rectilignes, parallèles entre eux et définissant une première direction de fils, il est avantageux que ladite première direction de piquage soit différente de ladite première direction de fils. De plus, si ledit substrat comprend au moins une deuxième nappe supplémentaire, superposée à ladite première nappe et constituée de tronçons de fils rectilignes, parallèles entre eux et définissant une deuxième direction de fils différente de la première, il est également avantageux que ladite première direction de piquage soit également différente de ladite deuxième direction de fils.

Afin que les propriétés de résistance au cisaillement et au délaminage de l'armature conforme à la présente invention soient identiques dans les deux sens de ladite première direction de piquage, ladite armature peut comprendre un deuxième ensemble de deuxièmes lignes de piquage parallèles entre elles, définissant une deuxième direction de piquage parallèle à ladite première direction de piquage et formée de deuxièmes points de piquage traversant ledit substrat à partir de ladite face extérieure de ce dernier, chacun desdits deuxièmes points de piquage étant oblique et traversant ledit substrat en biais en présentant une inclinaison opposée à celle desdits premiers points de piquage et en faisant, avec ladite face extérieure du substrat, un deuxième angle d'inclinaison au plus égal à 30° et, de préférence, symétrique dudit premier angle.

L'armature conforme à la présente invention peut comprendre, de plus, un troisième ensemble de troisièmes lignes de piquage, parallèles entre elles, définissant une troisième direction de piquage différente desdites première et deuxième directions de fils et desdites première et deuxième directions de piquage et formée de troisièmes points de piquage obliques traversant ledit substrat en biais à partir de ladite face extérieure, en faisant avec celle-ci un troisième angle d'inclinaison au plus égal à 30°, et, de préférence, au plus égal à 10° et égal auxdits premier et deuxième angles.

De façon semblable à ce qui a été dit à propos de ladite deuxième direction de piquage, l'armature conforme à la présente invention comprend, avantageusement, un quatrième ensemble de quatrièmes lignes de piquage parallèles entre elles, définissant une quatrième direction de piquage parallèle à ladite troisième direction de piquage et formée de quatrièmes points de piquage traversant ledit substrat à partir de ladite surface extérieure de ce dernier, chacun desdits quatrièmes points de piquage étant oblique et traversant ledit substrat en biais en présentant une inclinaison opposée à celle desdits troisièmes points de piquage et en faisant, avec ladite face extérieure du substrat, un quatrième angle d'inclinaison au plus égal à 30° et, de préférence, symétrique dudit troisième angle.

Ainsi, dans le cas usuel où lesdites première et deuxième directions de fils sont perpendiculaires l'une à l'autre et définissent respectivement les directions 0° et 90° de ladite armature, on obtient une armature de structure et de propriétés quasiment isotropes en réalisant lesdites première, deuxième, troisième et quatrième directions de piquage respectivement à 45°, 225°, 135° et 315°.

Par ailleurs, si lesdites première et deuxième directions de fils sont perpendiculaires l'une à l'autre et forment des mailles au moins approximativement carrées, dont les côtés ont une longueur égale à a, il est avantageux que ladite première direction de piquage soit orientée selon une diagonale desdites mailles et que le pas desdits premiers et deuxièmes points de piquage soit égal à $a \times 2^{\frac{1}{2}}$.

De façon symétrique, ladite troisième direction de piquage peut alors être orientée selon l'autre diagonale desdites mailles et le pas desdits troisièmes et quatrièmes points de piquage peut être égal à $a \times 2^{\frac{1}{2}}$.

L'armature conforme à la présente invention présente ainsi un excellent entrelacement des fils de substrat et des fils de piquage.

On remarquera que lesdits premiers, deuxièmes, troisièmes et quatrièmes points de piquage, en s'insérant en oblique entre les fils desdites première et deuxième directions de fils de plusieurs nappes superposées, écartent lesdits fils de sorte qu'il en résulte un décalage des fils de la première direction d'une nappe par rapport aux fils de la première direction de la nappe sous-jacente et un décalage des fils de la deuxième direction d'une nappe par rapport aux fils de la deuxième direction de la nappe sous-jacente. Ainsi, d'une nappe à la nappe sous-jacente, les fils de la première direction sont disposés en quinconce et il en est de même des fils de la deuxième direction.

On comprendra aisément que, dans le cas où lesdites première et deuxième directions de fils forment des mailles carrées de côté a comme indiqué ci-dessus, il est possible de régler l'angle de piquage desdits premiers, deuxièmes, troisièmes et quatrièmes points de piquage, ainsi que d'autres paramètres tels que la section des fils desdits points de piquage, pour que, d'une nappe à la suivante, les fils desdites première et deuxième directions soient respectivement décalés de a/2. Ainsi, après piquage, lesdites première et deuxième directions de fils forment deux réseaux de mailles, disposés en quinconce dans l'épaisseur de ladite armature.

La présente invention concerne de plus un dispositif pour la réalisation d'une armature pour pièce de matière composite à partir d'un substrat fibreux, ledit dispositif étant du type connu et comportant :

- une aiguille susceptible d'introduire dans ledit substrat un fil de piquage continu à travers une face extérieure dudit substrat ;
- des moyens pour animer ladite aiguille d'un mouvement de va-et-vient ; et
- des moyens pour engendrer un déplacement relatif dudit substrat par rapport à ladite aiguille.

Selon la présente invention, un tel dispositif est remarquable en ce que ladite aiguille est inclinée par rapport à ladite face extérieure du substrat en faisant un angle au plus égal à 30° par rapport à celle-ci, et de préférence au plus égal à 10°.

De même, conformément à l'invention, le procédé de réalisation d'une armature pour pièce de matière composite, comprenant un substrat fibreux renforcé par un fil de piquage formant des lignes de piquage constituées de points de piquage traversant ledit substrat à partir d'une face extérieure de ce dernier, est remarquable en ce que lesdits points de piquage sont réalisés en biais par rapport à ladite face extérieure, sous un angle d'inclinaison au plus égal à 30°, et de préférence au plus égal à 10°.

Les figures du dessin annexé feront bien comprendre comment l'invention peut être réalisée. Sur ces figures, des références identiques désignent des éléments semblables.

La figure 1 est une vue latérale schématique illustrant le procédé et le dispositif conformes à la présente invention.

La figure 2 est une coupe partielle de l'outil de la figure 1.

La figure 3 montre une variante de réalisation de l'outil des figures 1 et 2.

La figure 4 montre schématiquement, en plan, une partie d'un exemple de réalisation de l'armature conforme à la présente invention.

Les figures 5 à 8 correspondent à des coupes agrandies, respectivement selon les lignes V-V, VI-VI, VII-VII et VIII-VIII de la figure 4.

La figure 9 est une vue schématique en plan d'une maille de l'exemple de réalisation d'armature des figures 4 à 8.

La figure 10 représente, en perspective schématique avec coupe, une portion de l'armature correspondant à la maille de la figure 9.

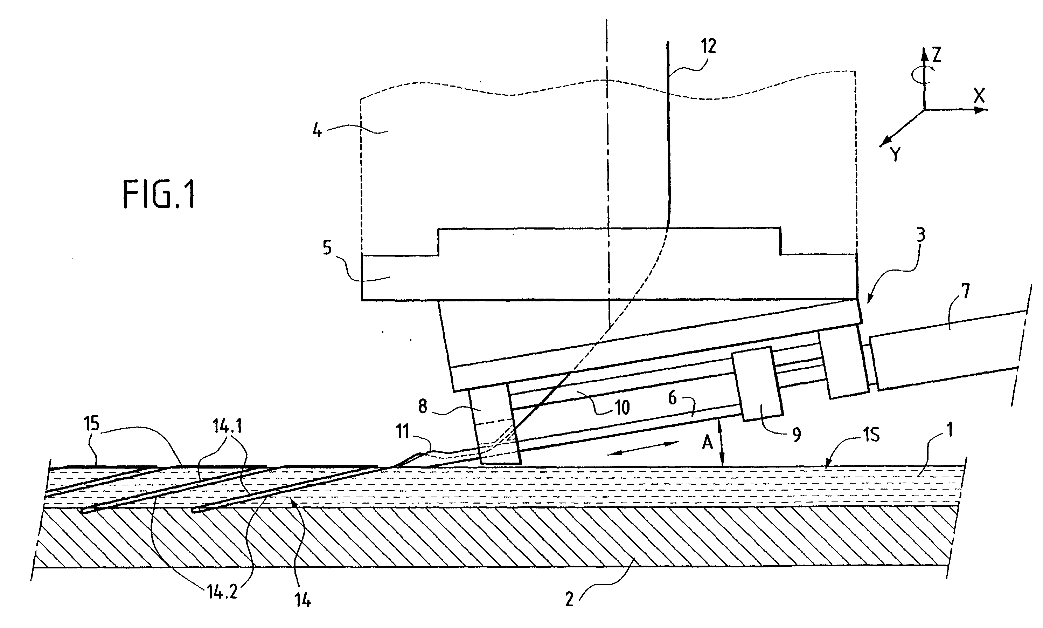

Sur la figure 1, on a représenté un substrat fibreux 1 reposant sur un support 2, ainsi qu'un outil de piquage 3 destiné à introduire des points de piquage dans ledit substrat fibreux 1.

L'outil de piquage 3 est par exemple monté sur un bras 4, susceptible de se déplacer, de façon connue et non représentée en détail, selon deux directions X et Y perpendiculaires entre elles et parallèles audit support 2 et selon une direction Z orthogonale à celui-ci, ainsi que de tourner autour de cette dernière direction Z. L'outil de piquage 3 comporte une base 5, qui permet de le relier au bras 4 et sur laquelle est montée une aiguille de piquage 6, susceptible d'être animée d'un moment de va-et-vient de piquage par un actionneur 7, par exemple pneumatique. L'aiguille de piquage 6 est guidée en translation par un guide fixe 8, qu'elle traverse, et est solidaire, à son extrémité non pointue, d'un coulisseau 9 actionné par l'actionneur 7 et guidée en coulissement par des guides 10. L'outil est incliné par rapport au support 2, de façon que l'aiguille de piquage 6 soit inclinée d'un angle A, au plus égale à 30°, mais de préférence de l'ordre de 10°, par rapport à la face extérieure 1S dudit substrat fibreux 1.

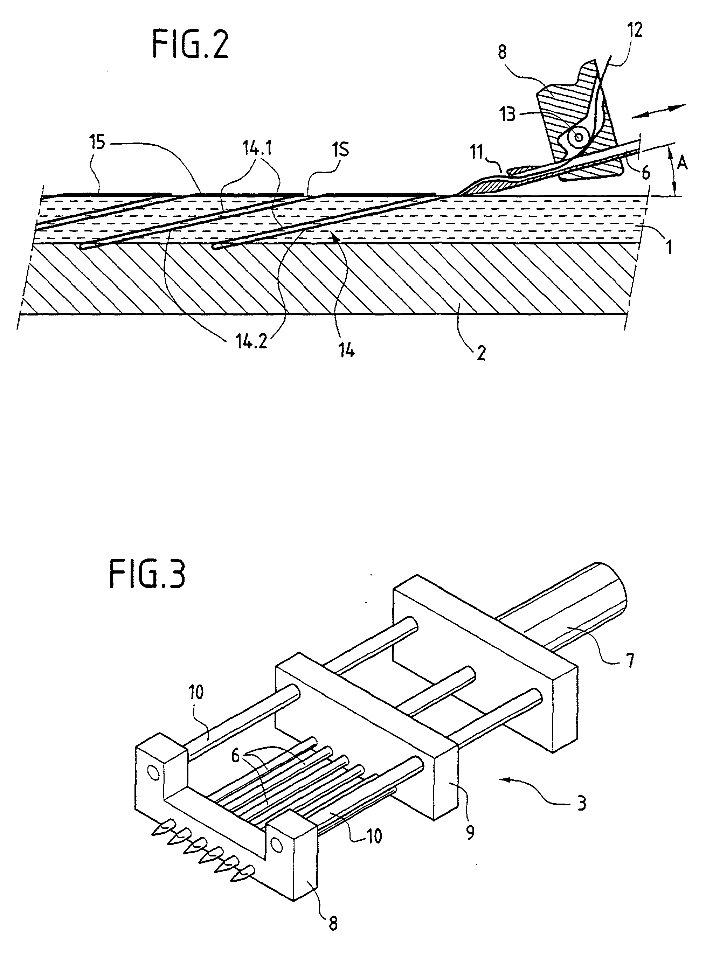

Comme le montre plus en détail la figure 2, l'aiguille de piquage inclinée 6 est creuse et/ou comporte un chas latéral 11 et est alimentée en fil de piquage 12, par l'intermédiaire d'un pince-fil commandable 13, par exemple logé dans le guide 8. Ainsi, ladite aiguille de piquage 6 peut former dans ledit substrat fibreux 1, avec ledit fil 12, des points de piquage 14, dont chacun d'eux est constitué de deux brins de fil 14.1 et 14.2, sensiblement parallèles entre eux mais inclinés de l'angle A par rapport audit substrat 1. Les points de piquage obliques 14 traversent complètement ledit substrat 1, en biais par rapport à l'épaisseur de ce dernier, et sont reliés les uns aux autres par des brins de fil 15 pour former des lignes de piquage. Les points de piquage 14, bien que représentés sur les figures 1 et 2 comme étant du type sans nouage (le support 2 étant alors pénétré par l'extrémité pointue de l'aiguille 6), pourraient bien entendu être de tout autre type, à condition que le support 2 s'y prête.

On comprendra de plus que l'outil 3, puisqu'il peut se déplacer parallèlement aux directions X, Y et Z et tourner autour de la direction Z, peut pratiquer dans le substrat fibreux 1 des lignes de piquage de toutes formes et orientations désirées.

La figure 3 montre que, éventuellement, l'outil 3 peut comporter une pluralité d'aiguilles 6, actionnées simultanément.

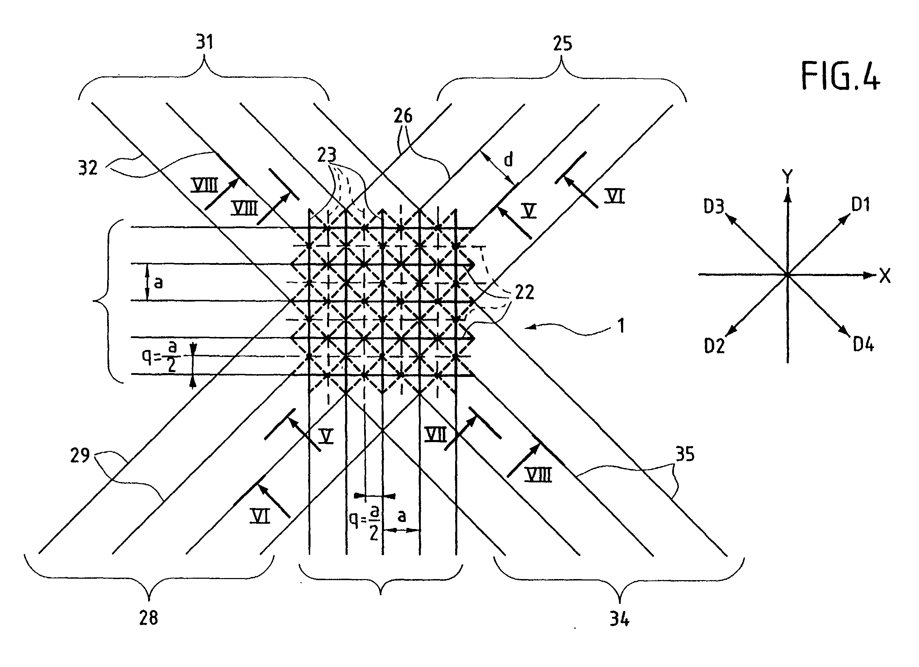

Dans l'exemple de réalisation de l'armature fibreuse, conforme à la présente invention et représentée sur les figures 4 à 9, on a supposé que ledit substrat 1 est formé par la superposition de nappes 20 et 21. Les nappes 20 sont constituées de tronçons de fils rectilignes 22, parallèles entre eux et à la direction X choisie comme direction 0°, tandis que les nappes 21 sont constituées de tronçons de fils rectilignes 23, parallèles entre eux et à la direction Y, perpendiculaire à la direction X et définissant donc la direction 90°. Les tronçons de fils 22 et 23 forment initialement entre eux un réseau de mailles 24, présentant par exemple une forme carrée de côté égal à a.

De la façon décrite ci-dessus en regard des figures 1 et 2, le substrat fibreux 1 des figures 4 à 9 est renforcé par le fil de piquage 12 formant :

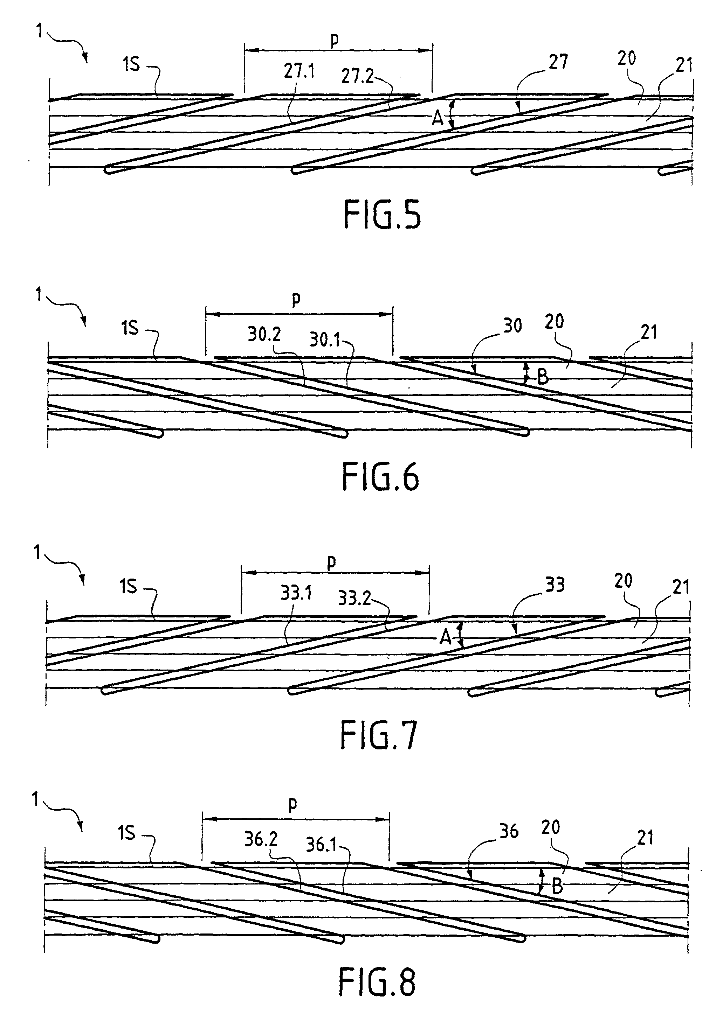

- un premier ensemble 25 de lignes de piquage 26 parallèles entre elles, qui définissent la direction de piquage D1 à 45° et qui sont constituées par des points de piquage obliques 27 (semblables aux points de piquage 14) traversant le substrat 1 de part en part, à partir de la face extérieure 1S de ce dernier, lesdits points de piquage 27 étant constitués de brins 27.1 et 27.2 formant un angle d'inclinaison A, au plus égal à 30° et de préférence au plus égal à 10°, avec ladite face extérieure 1S (voir la figure 5). Le pas $p$ des points de piquage 27 est égal à $ax2^{1/2}$ et la distance $d$ entre deux lignes de piquage 26 est aussi égale à $ax2^{1/2}$ ;

- un deuxième ensemble 28 de lignes de piquage 29 parallèles entre elles, qui définissent la direction de piquage D2 à 225° et qui sont constituées par des points de piquage obliques 30 (semblables aux points de piquage 14) traversant le substrat 1 de part en part, à partir de la face extérieure 1S de ce dernier, lesdits points de piquage 30 étant constitués de brins 30.1 et 30.2 formant un angle d'inclinaison B (égal à A, mais symétrique de celui-ci) au plus égal à 30° et de préférence au plus égal à 10°, avec ladite face extérieure 1S (voir la figure 6). Le pas $p$ des points de piquage 30 est égal à $ax2^{\frac{1}{2}}$ et la distance $d$ entre deux lignes de piquage 29 est aussi égale à $ax2^{\frac{1}{2}}$;

- un troisième ensemble 31 de lignes de piquage 32 parallèles entre elles, qui définissent la direction de piquage D3 à 135° et qui sont constituées par des points de piquage obliques 33 (semblables aux points de piquage 14) traversant le substrat 1 de part en part, à partir de la face extérieure 1S de ce dernier, lesdits points de piquage 33 étant constitués de brins 33.1 et 33.2 formant un angle d'inclinaison A, au plus égal à 30° et de préférence au plus égal à 10°, avec ladite face extérieure 1S (voir la figure 7). Le pas $p$ des points de piquage 33 est égal à $ax2^{\frac{1}{2}}$ et la distance $d$ entre deux lignes de piquage 32 est aussi égale à $ax2^{\frac{1}{2}}$; et

- un quatrième ensemble 34 de lignes de piquage 35 parallèles entre elles, qui définissent la direction de piquage D4 à 315° et qui sont constituées par des points de piquage obliques 36 (semblables aux points de piquage 14) traversant le substrat 1 de part en part, à partir de la face extérieure 1S de ce dernier, lesdits points de piquage 36 étant constitués de brins 36.1 et 36.2 formant un angle d'inclinaison B (tel que ci-dessus), au plus égal à 30° et de préférence au plus égal à 10°, avec ladite face extérieure 1S (voir la figure 8). Le pas $p$ des points de piquage 36 est égal à $ax2^{\frac{1}{2}}$ et la distance $d$ entre deux lignes de piquage 33 est aussi égale à $ax2^{\frac{1}{2}}$.

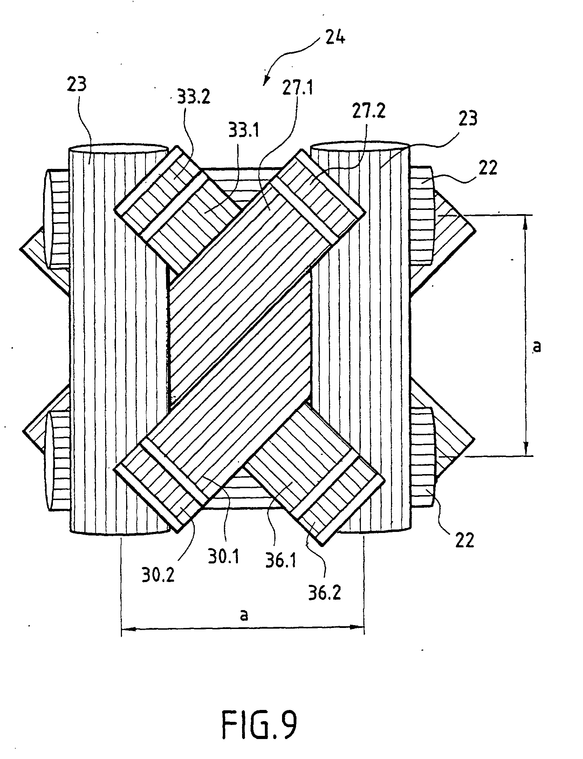

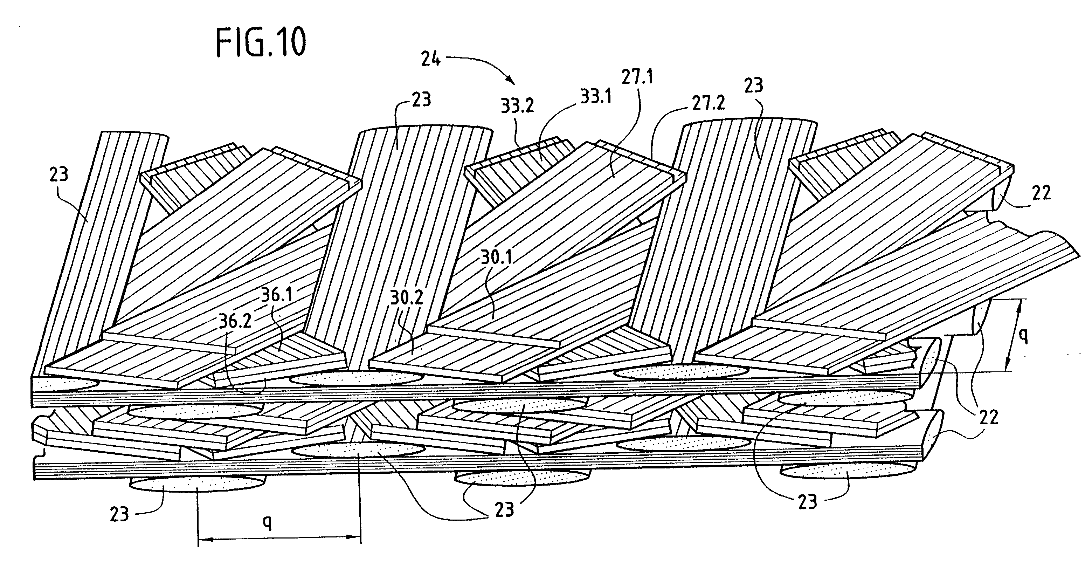

Sur la figure 4, pour des raisons de clarté, les tronçons de fils 22 et 23 et les lignes de piquage 25, 28, 31 et 34 sont représentés écartés les uns des autres. Dans la réalité, l'armature de la figure 4 se présente comme cela est représenté, de façon plus réaliste, par les figures 9 et 10.

On remarquera que:

- si l'armature 1 est tassée, les points de piquage obliques 27, 30, 33 et 36 présentent, après tassement, un angle d'inclinaison inférieur à leur angle d'introduction A ou B ;

- l'armature 1 des figures 4 à 9 forme une armature à 3 dimensions et à 6 directions de fils 22, 23, 25, 28, 31 et 34, qui est souple et peut être appliquée sur un support de forme non développable, à cause de la souplesse des directions 25, 28, 31 et 34 formées de points de piquage inclinés ;

- les brins de fil 27.1 et 27.2, 30.1 et 30.2, 33.1 et 33.2 et 36.1 et 36.2 des points de piquage respectifs 27, 30, 33 et 36 s'insèrent entre les fils 22 et les fils 23 des nappes 20 et 21 superposées différentes en écartant lesdits fils 22 et 23, de sorte que après piquage (comme cela est visible sur la figure 10), les fils 22 de deux nappes 20 consécutives sont disposés en quinconce et les fils 23 de deux nappes 21 consécutives sont également disposés en quinconce. Le décalage q entre les fils 22 (ou 23) de deux nappes voisines 20 (ou 21) peut être réglé de façon à être égal à a/2, comme cela est illustré sur la figure 4.

## Revendications

1. Armature pour pièce de matière composite, comprenant un substrat fibreux (1) renforcé par un fil de piquage (12) formant des points de piquage (14, 27, 30, 33, 36) traversant ledit substrat à partir d'une face extérieure (1S) de ce dernier,
   **caractérisée en ce qu'**au moins certains desdits points de piquage (14, 27, 30, 33, 36) sont obliques et traversent ledit substrat (1) en biais en faisant un angle d'inclinaison (A, B) au plus égal à 30° avec ladite face extérieure (1S) dudit substrat (1).

2. Armature selon la revendication 1,
   **caractérisée en ce que** ledit angle d'inclinaison est au plus égal à 10°.

3. Armature selon l'une des revendications 1 ou 2, dans laquelle ledit fil de piquage (12) forme au moins un premier ensemble (25) de premières lignes de piquage (26) parallèles entre elles, qui définissent une première direction de piquage (D1) et sont constituées de premiers points de piquage (27) traversant ledit substrat à partir de ladite face extérieure (1S) de ce dernier,
   **caractérisée en ce que** chacun desdits premiers points de piquage (27) est oblique et traverse ledit substrat (1) en biais en faisant un premier angle d'inclinaison (A) au plus égal à 30° avec ladite face extérieure (1S) dudit substrat (1).

4. Armature selon la revendication 3, dans laquelle ledit substrat fibreux (1) comprend au moins une première nappe (20) constituée de tronçons de fils rectilignes (22), parallèles entre eux et définissant une première direction de fils (X),
   **caractérisée en ce que** ladite première direction de piquage (D1) est différente de ladite première direction de fils (X).

5. Armature selon la revendication 4, dans laquelle ledit substrat fibreux (1) comprend de plus au moins une deuxième nappe (21), superposée à ladite première nappe (20) et constituée de tronçons de fils rectilignes (23), parallèles entre eux et définissant une deuxième direction de fils (Y),
**caractérisée en ce que** ladite première direction de piquage (D1) est également différente de ladite deuxième direction de fils (Y).

6. Armature selon l'une quelconque des revendications 3 à 5,
**caractérisée en ce que** :

   - elle comprend un deuxième ensemble (28) de deuxièmes lignes de piquage (29) parallèles entre elles, définissant une deuxième direction de piquage (D2) parallèle à ladite première direction de piquage (D1) et formée de deuxièmes points de piquage (30) traversant ledit substrat (1) à partir de ladite face extérieure (1S) de ce dernier ; et
   - chacun desdits deuxièmes points de piquage (30) est oblique et traverse ledit substrat (1) en biais en présentant une inclinaison opposée à celle desdits premiers points de piquage et en faisant, avec ladite face extérieure du substrat (1), un deuxième angle d'inclinaison (B) au plus égal à 30°.

7. Armature selon la revendication 6,
**caractérisée en ce que** ledit deuxième angle d'inclinaison (B) est symétrique dudit premier angle d'inclinaison (A).

8. Armature selon les revendications 4, 5 et 6,
**caractérisée en ce qu'**elle comprend un troisième ensemble (31) de troisièmes lignes de piquage (32), parallèles entre elles, définissant une troisième direction (D3) de piquage différente desdites première et deuxième directions de fils (X, Y) et desdites première et deuxième directions de piquage (D1, D2) et formée de troisièmes points de piquage obliques (33) traversant ledit substrat (1) en biais à partir de ladite face extérieure (1S), en faisant avec celle-ci un troisième angle d'inclinaison (A) au plus égal à 30°.

9. Armature selon la revendication 8,
**caractérisée en ce que** la valeur dudit troisième angle d'inclinaison est égale à celle desdits premier et deuxième angles.

10. Armature selon l'une des revendications 8 ou 9,
**caractérisée en ce que** :

   - elle comprend un quatrième ensemble (31) de quatrièmes lignes de piquage (32) parallèles entre elles, définissant une quatrième direction de piquage (D4) parallèle à ladite troisième direction de piquage (D3) et formée de quatrièmes points de piquage (36) traversant ledit substrat (1) à partir de ladite surface extérieure (1S) de ce dernier ; et

   - chacun desdits quatrièmes points de piquage (36) est oblique et traverse ledit substrat (1) en biais en présentant une inclinaison opposée à celle desdits troisièmes points de piquage (33) et en faisant, avec ladite face extérieure (1S) du substrat (1), un quatrième angle d'inclinaison (B) au plus égal à 30°.

11. Armature selon la revendication 10,
**caractérisée en ce que** ledit quatrième angle d'inclinaison (B) est symétrique dudit troisième angle d'inclinaison (A).

12. Armature selon l'une des revendications 10 ou 11, dans laquelle lesdites première et deuxième directions de fils (X, Y) sont perpendiculaires l'une à l'autre et définissent respectivement les directions 0° et 90° de ladite armature,
**caractérisée en ce que** lesdites première, deuxième, troisième et quatrième directions de piquage (D1, D2, D3 et D4) sont respectivement à 45°, 225°, 135° et 315°.

13. Armature selon les revendications 4 et 5, dans laquelle lesdites première et deuxième directions de fils (X, Y) sont perpendiculaires l'une à l'autre et forment des mailles (24) au moins approximativement carrées, dont les côtés ont une longueur égale à $\underline{a}$,
**caractérisée en ce que** ladite première direction de piquage (D1) est orientée selon une diagonale desdites mailles (24) et en ce que le pas desdits premiers points de piquage (27) est égal à $ax2^{\frac{1}{2}}$.

14. Armature selon les revendications 6 et 13,
**caractérisée en ce que** le pas desdits deuxièmes points de piquage (30) est égal à $ax2^{\frac{1}{2}}$.

15. Armature selon les revendications 8 et 13,
**caractérisée en ce que** ladite troisième direction de piquage (D3) est orientée selon l'autre diagonale desdites mailles (24) et en ce que le pas desdits troisièmes points de piquage (33) est égal à $ax2^{\frac{1}{2}}$.

16. Armature selon les revendications 10 et 15,
**caractérisée en ce que** le pas desdits quatrièmes points de piquage (36) est égal à $ax2^{\frac{1}{2}}$.

17. Armature selon l'une des revendications 5 à 16,
**caractérisée en ce que** lesdites premières nappes (20) et lesdites deuxièmes nappes (21) délimitent des mailles (24) à travers lesquelles passent lesdits points de piquage (14, 27, 30, 33, 36).

18. Armature selon la revendication 17,
**caractérisée en ce qu'**elle comporte, après piquage, deux réseaux de mailles (24) disposées alternativement en quinconce, dans l'épaisseur de ladite armature.

**19.** Armature selon la revendication 18,
**caractérisée en ce que** le décalage de quinconce (q) des deux réseaux de mailles est au moins approximativement égal à la moitié du côté (a) desdites mailles (24).

**20.** Procédé de réalisation d'une armature pour pièce de matière composite, comprenant un substrat fibreux (1) renforcé par un fil de piquage (12) formant des lignes de piquage constituées de points de piquage traversant ledit substrat à partir d'une face extérieure de ce dernier,
**caractérisé en ce que** lesdits points de piquage (27, 30, 33, 36) sont réalisés en biais par rapport à ladite face extérieure, sous un angle d'inclinaison (A, B) au plus égal à 30°.

**21.** Procédé selon la revendication 20,
**caractérisé en ce que** ledit angle d'inclinaison est au plus égal à 10°.

**22.** Dispositif pour la réalisation d'une armature pour pièce de matière composite à partir d'un substrat fibreux (1), ledit dispositif comportant :

- une aiguille (6) susceptible d'introduire dans ledit substrat (1) un fil de piquage continu (12) à travers une face extérieure (1S) dudit substrat ;
- des moyens (7) pour animer ladite aiguille (6) d'un mouvement de va-et-vient le long de son axe longitudinal ; et
- des moyens (4) pour engendrer un déplacement relatif dudit substrat par rapport à ladite aiguille,

**caractérisé en ce que** ladite aiguille (6) est inclinée par rapport à ladite face extérieure (1S) du substrat (1) en faisant un angle (A, B) au plus égal à 30° par rapport à celle-ci.

**23.** Dispositif selon la revendication 22,
**caractérisé en ce que** ledit angle est au plus égal à 10°.

**24.** Dispositif selon l'une des revendications 22 ou 23,
**caractérisé en ce qu'**il comporte plusieurs aiguilles (6) disposées parallèlement les unes aux autres et actionnées ensemble par lesdits moyens d'animation (7).

## Claims

**1.** A reinforcement for a composite component, comprising a fibrous substrate (1) reinforced by a stitching thread (12) forming stitches (14, 27, 30, 33, 36) passing through said substrate from an external surface (1S) of the latter,
**characterized in that** at least some of said stitches (14, 27, 30, 33, 36) are oblique and pass through said substrate (1) slantwise, making an angle of inclination (A, B) of at most 30° with said external surface (1S) of said substrate (1).

**2.** The reinforcement as claimed in claim 1,
**characterized in that** said angle of inclination is at most 10°.

**3.** The reinforcement as claimed in either of claims 1 and 2, in which said stitching thread (12) forms at least a first array (25) of first mutually parallel lines of stitching (26), which define a first direction of stitching (D1) and consist of first stitches (27) passing through said substrate from said external surface (1S) of the latter,
**characterized in that** each of said first stitches (27) is oblique and passes through said substrate (1) slantwise, making a first angle of inclination (A) of at most 30° with said external surface (1S) of said substrate (1).

**4.** The reinforcement as claimed in claim 3, in which said fibrous substrate (1) comprises at least a first ply (20) consisting of mutually parallel lengths of straight threads (22) defining a first direction of threads (X),
**characterized in that** said first direction of stitching (D1) is different from said first direction of threads (X).

**5.** The reinforcement as claimed in claim 4, in which said fibrous substrate (1) comprises, in addition, at least a second ply (21), superposed on said first ply (20) and consisting of mutually parallel lengths of straight threads (23) defining a second direction of threads (Y),
**characterized in that** said first direction of stitching (D1) is also different from said second direction of threads (Y).

**6.** The reinforcement as claimed in any one of claims 3 to 5, **characterized in that**:

- it comprises a second array (28) of mutually parallel second lines of stitching (29) which define a second direction of stitching (D2) parallel to said first direction of stitching (D1) and are formed from second stitches (30) passing through said substrate (1) from said external surface (1S) of the latter; and
- each of said second stitches (30) is oblique and passes through said substrate (1) slantwise, making an angle of inclination which is the opposite of that of said first stitches and making, with said external surface of the substrate (1), a second angle of inclination (B) of at most 30°.

7. The reinforcement as claimed in claim 6, **characterized in that** the said second angle of inclination (B) is symmetrical with respect to said first angle of inclination (A).

8. The reinforcement as claimed in claims 4, 5 and 6, **characterized in that** it comprises a third array (31) of mutually parallel third lines of stitching (32) which define a third direction of stitching (D3) different from said first and second directions of threads (X, Y) and from said first and second directions of stitching (D1, D2) and are formed from third oblique stitches (33) passing through said substrate (1) slantwise from said external surface (1S), making with the latter a third angle of inclination (A) of at most 30°.

9. The reinforcement as claimed in claim 8, **characterized in that** the value of said third angle of inclination is equal to that of said first and second angles.

10. The reinforcement as claimed in either of claims 8 and 9, **characterized in that**:

    - it comprises a fourth array (31) of mutually parallel fourth lines of stitching (32) which define a fourth direction of stitching (D4) parallel to said third direction of stitching (D3) and are formed from fourth stitches (36) passing through said substrate (1) from said external surface (1S) of the latter; and
    - each of said fourth stitches (36) is oblique and passes through said substrate (1) slantwise, making an angle of inclination which is the opposite of that of said third stitches (33) and making, with said external surface (1S) of the substrate (1), a fourth angle of inclination (B) of at most 30°.

11. The reinforcement as claimed in claim 10, **characterized in that** said fourth angle of inclination (B) is symmetrical with respect to said third angle of inclination (A).

12. The reinforcement as claimed in either of claims 10 and 11, in which said first and second directions of threads (X, Y) are mutually perpendicular and define, respectively, the 0° and 90° directions of said reinforcement, **characterized in that** said first, second, third and fourth directions of stitching (D1, D2, D3 and D4) are at 45°, 225°, 135° and 315°, respectively.

13. The reinforcement as claimed in claims 4 and 5, in which said first and second directions of threads (X, Y) are mutually perpendicular and form at least approximately square mesh cells (24), the sides of which have a length of $\underline{a}$, **characterized in that** said first direction of stitching (D1) is oriented along a diagonal of said mesh cells (24) and wherein the spacing of said first stitches (27) is $\sqrt{2}a$.

14. The reinforcement as claimed in claims 6 and 13, **characterized in that** the spacing of said second stitches (30) is $\sqrt{2}a$.

15. The reinforcement as claimed in claims 8 and 13, **characterized in that** said third direction of stitching (D3) is oriented along the other diagonal of said mesh cells (24) and wherein the spacing of said third stitches (33) is $\sqrt{2}a$.

16. The reinforcement as claimed in claims 10 and 15, **characterized in that** the spacing of said fourth stitches (36) is $\sqrt{2}a$.

17. The reinforcement as claimed in one of claims 5 to 16, **characterized in that** said first plies (20) and said second plies (21) define mesh cells (24) through which said stitches (14, 27, 30, 33, 36) pass.

18. The reinforcement as claimed in claim 17, **characterized in that** it comprises, after stitching, two meshes consisting of mesh cells (24) arranged alternately in a staggered fashion in the thickness of said reinforcement.

19. The reinforcement as claimed in claim 18, **characterized in that** the stagger offset (q) of the two meshes is at least approximately equal to half the side (a) of said mesh cells (24).

20. A process for producing a reinforcement for a composite component, comprising a fibrous substrate (1) reinforced by a stitching thread (12) forming lines of stitching consisting of stitches passing through said substrate from an external surface of the latter, **characterized in that** said stitches (27, 30, 33, 36) are produced slantwise with respect to said external surface, at an angle of inclination (A, B) of at most 30°.

21. The process as claimed in claim 20, **characterized in that** said angle of inclination is at most 10°.

22. A device for the production of a reinforcement for a composite component from a fibrous substrate (1), said device comprising:

-   a needle (6) capable of inserting a continuous stitching thread (12) into said substrate (1) through an external surface (1S) of said substrate;
-   means (7) for making said needle (6) undergo a reciprocating motion along its longitudinal axis; and
-   means (4) for generating a relative movement of said substrate with respect to said needle,

    **characterized in that** said needle (6) is inclined with respect to said external surface (1S) of the substrate (1), making an angle (A, B) of at most 30° with respect to the latter.

23. The device as claimed in claim 22,
    **characterized in that** said angle is at most 10°.

24. The device as claimed in either of claims 22 and 23, **characterized in that** it comprises several needles (6) arranged so as to be parallel to one another and actuated together by said actuating means (7).

**Patentansprüche**

1. Bewehrung für Teile aus Verbundwerkstoff, die eine faserförmige Unterlage (1) umfasst, das durch einen Steppfaden (12) verstärkt wird, der Stepppunkte (14, 27, 30, 33, 36) bildet, die ausgehend von einer Außenfläche (1S) der genannten Unterlage durch letztere hindurchführen,
   **dadurch gekennzeichnet**, dass mindestens bestimmte der genannten Stepppunkte (14, 27, 30, 33, 36) schräg sind und quer durch die genannte Unterlage (1) hindurchführen und dabei einen Steigungswinkel (A, B) mit der genannten Außenfläche (1S) der genannten Unterlage (1) bilden, der höchstens gleich 30° ist.

2. Bewehrung gemäß Anspruch 1,
   **dadurch gekennzeichnet**, dass der genannte Steigungswinkel höchstens 10° beträgt.

3. Bewehrung gemäß einem der Ansprüche 1 oder 2, in der der genannte Steppfaden (12) mindestens eine erste Einheit (25) von ersten zueinander parallelen Stepplinien (26) bildet, die eine erste Stepprichtung (D1) definieren und aus ersten Stepppunkten (27) bestehen, die ausgehend von der genannten Außenfläche (1S) der genannten Unterlage durch diese hindurchführen,
   **dadurch gekennzeichnet**, dass jeder der genannten ersten Stepppunkte (27) schräg ist und quer durch die genannte Unterlage (1) hindurchführt und dabei einen ersten Steigungswinkel (A) mit der genannten Außenfläche (1S) der genannten Unterlage (1) bildet, der höchstens gleich 30°.

4. Bewehrung gemäß Anspruch 3, in dem die genannte faserförmige Unterlage (1) mindestens eine erste Schicht (20) umfasst, die aus geraden, zueinander parallelen Fadenstücken (22) besteht, die eine erste Fadenrichtung (X) definieren,
   **dadurch gekennzeichnet**, dass sich die genannte erste Stepprichtung (D1) von der genannten ersten Fadenrichtung (X) unterscheidet.

5. Bewehrung gemäß Anspruch 4, in dem die genannte faserförmige Unterlage (1) weiterhin mindestens eine zweite Schicht (21) umfasst, die auf der genannten ersten Schicht (20) angeordnet ist und aus geraden, zueinander parallelen Fadenstücken (23) besteht, die eine zweite Fadenrichtung (Y) definieren,
   **dadurch gekennzeichnet**, dass sich die genannte erste Stepprichtung (D1) ebenfalls von der genannten zweiten Fadenrichtung (Y) unterscheidet,

6. Bewehrung gemäß einem beliebigen der Ansprüche 3 bis 5, **dadurch gekennzeichnet**, dass

   -   sie eine zweite Einheit (28) von zweiten zueinander parallelen Stepplinien (29) umfasst, die eine zweite Stepprichtung (D2) definieren, die parallel zur genannten ersten Stepprichtung (D1) verläuft und von zweiten Stepppunkten (30) gebildet wird, die ausgehend von der genannten Außenfläche (1S) der genannten Unterlage(1) durch letzteres hindurchführen; und
   -   jeder der genannten zweiten Stepppunkte (30) schräg ist und quer durch die genannte Unterlage (1) hindurchführt und dabei eine Neigung aufweist, die der der genannten ersten Stepppunkte entgegengesetzt ist, und mit der genannten Außenfläche der Unterlage (1) einen zweiten Steigungswinkel (B) bildet, der höchstens gleich 30° ist.

7. Bewehrung gemäß Anspruch 6,
   **dadurch gekennzeichnet**, dass der genannte zweite Steigungswinkel (B) symmetrisch zum ersten Steigungswinkel (A) ist.

8. Bewehrung gemäß den Ansprüchen 4, 5 und 6,
   **dadurch gekennzeichnet**, dass sie eine dritte Einheit (31) von dritten zueinander parallelen Stepplinien (32) umfasst, die eine dritte Stepprichtung (D3) definieren, die sich von der genannten ersten und zweiten Fadenrichtung (X, Y) unterscheidet und von dritten schrägen Stepppunkten (33) gebildet wird, die ausgehend von der genannten Außenfläche (1S) der genannten Unterlage (1) durch diese hindurchführen und dabei mit dieser Außenfläche einen dritten Steigungswinkel (A) bilden, der höchstens gleich 30° ist.

**9.** Bewehrung gemäß Anspruch 8,
**dadurch gekennzeichnet**, dass der Wert des genannten dritten Steigungswinkels gleich dem des genannten ersten und des genannten zweiten Winkels ist.

**10.** Bewehrung gemäß einem der Ansprüche 8 oder 9,
**dadurch gekennzeichnet**, dass

- sie eine vierte Einheit (31) von vierten zueinander parallelen Stepplinien (32) umfasst, die eine vierte Stepprichtung (D4) definieren, die parallel zur genannten dritten Stepprichtung (D3) verläuft und von vierten Stepppunkten (36) gebildet wird, die ausgehend von der genannten Außenfläche (1S) der genannten Unterlage (1) durch letztere hindurchführen; und

- jeder der genannten vierten Stepppunkte (36) schräg ist und quer durch die genannte Unterlage (1) hindurchführt und dabei eine Neigung aufweist, die der der genannten dritten Stepppunkte (33) entgegengesetzt ist und mit der genannten Außenfläche (1S) der Unterlage (1) einen vierten Steigungswinkel (B) bildet, der höchstens 30° beträgt.

**11.** Bewehrung gemäß Anspruch 10,
**dadurch gekennzeichnet**, dass der genannte vierte Steigungswinkel (B) symmetrisch zum genannten dritten Steigungswinkel (A) ist.

**12.** Bewehrung gemäß einem der Ansprüche 10 oder 11, in dem die genannte erste und zweite Fadenrichtung (X, Y) rechtwinklig zueinander sind und jeweils die Richtungen 0° und 90° der genannten Bewehrung definieren,
**dadurch gekennzeichnet**, dass die genannte ersten, zweite, dritte und vierte Stepprichtung (D1, D2, D3 und D4) bei 45°, 225°, 135° beziehungsweise 315° liegen.

**13.** Bewehrung gemäß den Ansprüchen 4 und 5, in dem die genannte erste und zweite Fadenrichtung (X, Y) rechtwinklig zueinander liegen und Maschen (24) bilden, die mindestens annähernd quadratisch sind und deren Seiten eine Länge gleich a besitzen,
**dadurch gekennzeichnet**, dass die genannte erste Stepprichtung (D1) nach einer Diagonale der genannten Maschen (24) ausgerichtet ist und dadurch, dass die Steigung der genannten ersten Stepppunkte (27) gleich $a \times 2^{\frac{1}{2}}$ ist.

**14.** Bewehrung gemäß den Ansprüchen 6 und 13,
**dadurch gekennzeichnet**, dass die Steigung der genannten zweiten Stepppunkte (30) gleich $a \times 2^{\frac{1}{2}}$ ist.

ist.

**15.** Bewehrung gemäß den Ansprüchen 8 und 13,
**dadurch gekennzeichnet**, dass die genannte dritte Stepprichtung (D3) nach der anderen Diagonale der genannten Maschen (24) ausgerichtet ist und dadurch, dass die Steigung der genannten dritten Stepppunkte (33) gleich $a \times 2^{\frac{1}{2}}$ ist.

**16.** Bewehrung gemäß den Ansprüchen 10 und 15,
**dadurch gekennzeichnet**, dass die Steigung der genannten vierten Stepppunkte (36) gleich $a \times 2^{\frac{1}{2}}$ ist.

**17.** Bewehrung gemäß einem der Ansprüche 5 bis 16,
**dadurch gekennzeichnet**, dass die genannten ersten Schichten (20) und die genannten zweiten Schichten (21) die Maschen (24) begrenzen, durch die die genannten Stepppunkte (14, 27, 30, 33, 36) hindurchführen.

**18.** Bewehrung gemäß Anspruch 17,
**dadurch gekennzeichnet**, dass sie nach dem Steppen zwei Netze von Maschen (24) umfasst, die wechselweise versetzt in der Dicke der genannten Bewehrung angeordnet sind.

**19.** Bewehrung gemäß Anspruch 18,
**dadurch gekennzeichnet**, dass der Zickzack-Versatz (q) der beiden Maschennetze mindestens annähernd gleich der Hälfte der Seitenlänge (a) der genannten Maschen ist.

**20.** Verfahren zur Herstellung einer Bewehrung für Teile aus Verbundwerkstoff, der eine faserförmiges Unterlage (1) umfasst, das durch einen Steppfaden (12) verstärkt wird, der Stepplinien bildet, die aus Stepppunkten bestehen, die von einer Außenfläche der genannten Unterlage aus durch letzteres hindurchführen,
**dadurch gekennzeichnet**, dass die genannten Stepppunkte (27, 30, 33, 36) quer in bezug auf die genannte Außenfläche in einem Steigungswinkel (A, B) von höchstens 30° ausgeführt werden.

**21.** Verfahren gemäß Anspruch 20,
**dadurch gekennzeichnet**, dass der genannte Steigungswinkel höchsten gleich 10° ist.

**22.** Vorrichtung zur Herstellung einer Bewehrung für Teile aus Verbundwerkstoff aus einer faserförmigen Unterlage (1), wobei die genannte Vorrichtung folgendes umfasst.

- eine Nadel (6), die durch eine Außenfläche (1S) der genannten Unterlage in die genannte Unterlage (1) einen durchgehenden Steppfaden (12) in die genannte Unterlage (1) einführen kann;

- Mittel (7), um die genannte Nadel (6) in eine Hin- und Herbewegung entlang ihrer Längsachse zu versetzen; und
- Mittel (4) zum Hervorrufen einer relativen Bewegung der genannten Unterlage in bezug auf die genannte Nadel,

**dadurch gekennzeichnet**, dass die genannte Nadel (6), indem sie einen Winkel (A, B) bildet, der höchstens 30° in Bezug auf die Außenfläche beträgt, in bezug auf die genannte Außenfläche (1S) der Unterlage (1) geneigt ist.

23. Vorrichtung gemäß Anspruch 22, **dadurch gekennzeichnet**, dass der genannte Winkel höchstens 10° beträgt.

24. Vorrichtung gemäß einem der Ansprüche 22 oder 23, **dadurch gekennzeichnet**, dass sie mehrere, parallel zueinander angeordnete und gemeinsam durch die genannten Bewegungsmittel (7) betätigte Nadeln umfasst.

FIG.1

FIG.2

FIG.3

FIG.4

FIG.5

FIG.6

FIG.7

FIG.8

FIG.9

FIG.10